# EUROPÄISCHE PATENTSCHRIFT

(11) **EP 1 262 366 B1**
(45) Veröffentlichungstag und Bekanntmachung des Hinweises auf die Patenterteilung: **31.05.2006**
(21) Anmeldenummer: 01113332.9
(22) Anmeldetag: 31.05.2001
(51) Int. Cl.: B60P 7/08

(54) **Vorrichtung zur Ladungssicherung**
Load securing device
Dispositif de fixation de charge

(43) Veröffentlichungstag der Anmeldung: 04.12.2002
(73) Patentinhaber: Westdeutscher Drahtseil-Verkauf Dolezych GmbH & Co., 44147 Dortmund (DE)
(72) Erfinder: Schöbel, Uwe, Dipl.-Ing., 44319 Dortmund (DE)
(74) Vertreter: Nunnenkamp, Jörg

(56) Entgegenhaltungen:
- DE-A- 4 000 722
- DE-U- 20 002 393
- GB-A- 2 110 608

## Beschreibung

Die Erfindung betrifft eine Vorrichtung zur Ladungssicherung, mit einem Zurrgurt, ferner mit einer am Zurrgurt befestigten Verbindungsöse, und mit zumindest zwei Profilhaken, die auf einem Positionierschenkel der Verbindungsöse verschiebbar gelagert sind und jeweils wenigstens zwei definierte Positionen in Zugebene einnehmen.

Bei dem Zurrgurt handelt es sich allgemein ausgedrückt um ein Zugmittel, also eine in der Regel längserstreckte Werkstoffbahn, die in der Lage ist, Zugkräfte aufbauen zu können. Folgerichtig kommt als Zurrgurt zumeist ein Gewebeband zum Einsatz. Selbstverständlich sind auch Gliederketten, mehradrige Seile usw. denkbar.

Die Verbindungsöse wird regelmäßig an ein oder beide Gurtenden angeschlossen. Das kann dadurch geschehen, dass die Verbindungsöse beispielsweise in das Gewebeband mit einem Befestigungsschenkel eingewebt wird. Ebenso ist es denkbar, dass der Befestigungsschenkel an das betreffende Gurtbandende angenäht ist, z.B. in eine Gurtbandschlinge eingenäht wird. Zweifellos liegen auch Ausgestaltungen im Rahmen der Erfindung, wonach ein mit dem Zurrgurt verbundenes Anschlussglied für die Befestigung der Verbindungsöse sorgt.

Generell werden Zurrgurte für die Ladungssicherung auf z.B. Fahrzeugen eingesetzt. So kennt man beispielsweise Zurrgurte mit U-Profilhaken, die dann Verwendung finden, wenn ein Fahrzeug nicht über ösenartige Zurrpunkte verfügt, in die üblicherweise die Profilhaken eingehängt werden. Das gleiche gilt für den Fall, dass solche Zurrpunkte durch die Ladung blockiert bzw. zugestellt sind. U-Profilhaken lassen sich zumeist an einem Fahrzeug-Längsträger befestigen.

Demgegenüber dürfen Zurrgurte mit Profilhaken praktisch nur dann für die erforderliche Ladungssicherung sorgen, wenn das Fahrzeug über ösenartige Zurrpunkte verfügt. In diesem Fall ist eine Befestigung am Fahrzeug-Längsträger oder am Fahrzeug-Rahmen nicht zulässig.

Daneben werden in der Praxis Zurrgurte zur Verlängerung bisweilen in unzulässiger Weise miteinander verbunden oder verknotet. Das führt zu einer deutlichen Reduzierung der Lastaufnahmefähigkeit.

Um diese grundsätzlichen Probleme zu überwinden, hat eine gattungsgemäße vorrichtung entsprechend der De-U-20002393 zur Ladungssicherung bereits vorgeschlagen, den Positionierschenkel mit zumindest zwei in einem vorgegebenen Abstand voneinander angeordneten Ausformungen auszurüsten. Dabei lassen sich die beiden Profilhaken unter Bildung eines Doppelprofilhakens zwischen die beiden Ausformungen verschieben. Daneben können die beiden Profilhaken auch einen U-Profilhaken formen, indem sie auf die voneinander abgewandten Außenseiten der Außenformungen axial auf dem Positionierungsschenkel verschoben werden. Die beiden Profilhaken sind also in der Lage, wenigstens die beiden zuvor beschriebenen Positionen (Doppelprofilhaken und U-Profilhaken) einnehmen zu können, und zwar in Zugebene, d.h. in der Ebene, in welcher die Zugkräfte wirken.

Die vorbeschriebene Vorrichtung hat sich grundsätzlich bewährt, birgt jedoch noch Verbesserungspotential in sich. Denn die Fertigung des bekannten Positionierschenkels mit den Ausformungen ist aufwendig im Vergleich zu einer Ausführungsform mit geradlinigem Positionierschenkel. Auch gestaltet sich der Wechsel von einer definierten Position in die andere zumeist etwas hakelig, zumal das Erreichen und die Einhaltung der jeweiligen Position an die Fertigungsgenauigkeit der Ausformungen gekoppelt ist. - Hier setzt die Erfindung ein.

Der Erfindung liegt das technische Problem zugrunde, eine Vorrichtung zur Ladungssicherung so weiter zu bilden, dass bei einfacher Bedienung insbesondere ein preisgünstiger Aufbau gewährleistet ist.

Zur Lösung dieses technischen Problems ist eine gattungsgemäße Vorrichtung zur Ladungssicherung dadurch gekennzeichnet, dass der Positionierschenkel geradlinig ist und dass die Profilhaken zum Wechsel von einer in die andere Position in einer zur Zugebene im Wesentlichen senkrechten Positionierbene - regelmäßig axial - verschoben werden und hierbei zum positionierschenkel gehörige Anschläge überfahren. D.h. nichts anderes, als dass die Profilhaken zum Wechsel von einer in die andere Position zunächst von der Zugebene in die Positionierebene verschwenkt werden. Dann erfolgt in der Positionierebene ein axiales Verschieben, wobei die Anschläge überfahren werden. Sobald dies geschehen ist, können die Profilhaken (wieder) in die Zugebene zurückkehren und stehen in der neuen Position für entsprechende Zugaufgaben zur Verfügung.

Bei den Anschlägen handelt es sich vorzugsweise um Radialerhebungen, deren Spitzen in Verlängerung die Positionierebene aufspannen bzw. sich hierin erstrecken. Als besonders vorteilhaft hat es sich erwiesen, wenn als Anschläge zwei oder mehr auf den Positionierschenkel aufgebrachte Schweißpunkte Verwendung finden. - Selbstverständlich umfasst die Erfindung an dieser Stelle auch Varianten dergestalt, dass anstelle der Schweißpunkte Klemmringe auf den Positionierschenkel aufgebracht werden. Ebenso sind andere Anschläge, z.B. Nieten, Schrauben, Materialausformungen usw. denkbar.

Es muss nur dafür gesorgt werden, dass der (regelmäßig mit einem kreisrunden Querschnitt ausgerüstete) Positionierschenkel im Bereich des Anschlages eine gleichsam tropfenartige oder kegelige Querschnittserweiterung erfährt, so dass die Profilhaken ihre beiden definierten Positionen in Zugebene einnehmen können und hierbei von den Anschlägen positioniert werden.

Dagegen sind die Profilhaken in der Positionierebene in der Lage, die Anschläge zu überfahren. Das erreicht die Erfindung im Kern dadurch, dass der jeweilige Profilhaken den Positionierschenkel mittels Ringösen mit vorgegebenem Bewegungsspiel umgreift. Weil diese Ringösen zumeist einen durch ihre Fertigung bedingten ebenfalls tropfenartigen oder leicht bauchigen Innenquerschnitt aufweisen, lassen sie sich nur dann über die zugehörigen Anschläge fahren, wenn sich der jeweilige Profilhaken in der Positionierebene befindet. Das wird mit Bezug zu der Figurenbeschreibung noch näher erläutert werden.

Jedenfalls müssen die Profilhaken zum Übergang von einer definierten Position in die andere von der Zugebene in die hierzu im Wesentlichen senkrechte Positionierebene verschwenkt werden, damit die Anschläge bzw. Radialerhebungen überwunden werden können.

Tatsächlich folgt die Zugebene zumeist dem Verlauf des Zurrgurtes bzw. dem zugehörigen Gurtbandverlauf, der gleichsam seine Fortsetzung in den Kraftvektoren der aufgebrachten Zugkraft und damit der Zugebene findet. Demgegenüber dient die Positionierebene letztlich nur dazu, das axiale Verschieben der Profilhaken auf dem Positionierschenkel sicherzustellen. Damit die verschiedenen definierten Positionen einwandfrei beibehalten werden und nicht ein unbeabsichtigter Wechsel erfolgt, ist es erforderlich, den Winkel zwischen Positionierebene und Zugebene entsprechend zu wählen, was bereits bei Winkeln von mehr als 45° der Fall sein kann - je nach Präzision der Anschläge bzw. Radialerhebungen sowie der Deckungsgleichheit mit dem Innenquerschnitt der zugehörigen Ringöse.

Die beiden Profilhaken bilden zumeist in der einen definierten Position einen Doppelprofilhaken und in der anderen definierten Position einen U-Profilhaken, wie dies in der DE 200 02 393 U1 bereits beschrieben wird. Um für einen sicheren Halt der Profilhaken sowohl in einem ösenartigen Zurrpunkt als auch beispielsweise an einem Fahrzeug-Längsträger zu gewährleisten, sind die Profilhaken an ihren ösenfreien Hakenenden jeweils mit Umbiegungen ausgerüstet.

Fertigungstechnisch hat es sich als vorteilhaft erwiesen, wenn die Verbindungsöse als in das Gurtende mittels des Befestigungsschenkels eingeschlaufte Rund- oder Ovalöse mit geradlinigem Positionierschenkel ausgebildet ist. Dabei kann der Befestigungsschenkel ebenfalls geradlinig und parallel zum Positionierschenkel verlaufen sowie im Wesentlichen gleichlang wie der Positionierschenkel ausgeführt sein und in eine Gurtbandschlinge mit Gurtbandverbreiterungen eingehängt werden.

Es ist aber auch denkbar, dass der Befestigungsschenkel geradlinig sowie parallel zum Positionierschenkel verläuft sowie kürzer als dieser ist und mittels Dreieckschenkeln oder Bogenschenkeln an den Positionsschenkel angeschlossen wird. Hierdurch lässt sich eine insgesamt trapezförmige Verbindungsöse darstellen. Der Vorteil dieser Ausführungsform liegt darin, dass in einem solchen Fall zumeist auf Gurtbandverbreiterungen verzichtet werden kann. Dafür ist die Fertigung etwas aufwendiger als bei einer Verbindungsöse, deren Befestigungsschenkel und Positionierschenkel in etwa gleichlang sind sowie geradlinig und parallel verlaufen.

Im Ergebnis wird eine Vorrichtung zur Ladungssicherung beschrieben, die zunächst einmal außerordentlich preisgünstig hergestellt werden kann. Denn im einfachsten Fall handelt es sich bei der Verbindungsöse um eine Rund- oder Ovalöse mit durchgängig gleichem Querschnitt, welcher lediglich im Bereich der Anschläge bzw. Radialerhebungen eine Vergrößerung erfährt. Weil diese Radialerhebungen zumeist als Schweißpunkte ausgeführt sind, lassen sie sich in einen Fertigungsprozess einfach integrieren, der zumeist ohnehin Schweißpunktverbindungen vorsieht (beispielsweise am stumpfen Ende des Drahtes, aus dem der jeweilige Profilhaken geformt wird und welcher in Richtung auf diesen unter Bildung der Ringöse zurückgebogen wird). Kurz und gut lassen sich die betreffenden Anschläge bzw. Radialerhebungen als Schweißpunkte äußerst preisgünstig realisieren.

Da der Erfindungsgegenstand zudem auf weitere Fertigungsschritte verzichtet (insbesondere Ausformungen nicht erforderlich sind, wie sie das Gebrauchsmuster DE 200 02 393 U1 fordert) sind die Herstellungskosten gering.

Daneben gelingt die Bedienung einfach und problemlos, weil der Wechsel vom Doppelprofilhaken zum U-Profilhaken und zurück einfach dadurch bewerkstelligt wird, dass die beiden Profilhaken von der Zugebene in die Positionierebene verschwenkt und dann die zugehörigen Anschläge überfahren werden sowie wieder in die Zugebene zurückkehren.

Immer wird erreicht, dass sich die Profilhaken als gleichsam Universalhaken einsetzen lassen, und zwar sowohl als Doppelhaken in Kombination mit Zurrpunkten an dem betreffenden Fahrzeug als auch als U-Profilhaken, wenn das Fahrzeug über solche Zurrpunkte nicht verfügt, oder diese durch die Ladung nicht zugänglich sind. Denn dann muss eine Befestigung an einem Fahrzeug-Längsträger erfolgen.

Hinzu kommt, dass sich die Profilhaken im Wege einer Zurrgurtverlängerung oder Zurrgurtverbindung aneinander anzuschließender Zurrgurte einfach und funktionsgerecht verlängern oder verbinden lassen. Denn in einem solchen Fall greifen die Profilhaken in die benachbarten Verbindungsösen ein, ohne dass eine Reduzierung der Lastaufnahmefähigkeit befürchtet werden muss. Tatsächlich werden hierzu die Profilhaken des einen Zurrgurtes als Doppelprofilhaken positioniert, während die Profilhaken des anderen Zurrgurtes einen U-Profilhaken bilden. Die Umbiegungen der beiden Profilhaken des U-Profilhakens greifen nun in die Verbindungsöse des Zurrgurtes mit dem Doppelprofilhaken ein, und zwar in Positionen, die dem U-Profilhaken entsprechen. Umgekehrtes gilt für den Zurrgurt, bei dem die Profilhaken einen Doppelprofilhaken bilden. Jedenfalls lassen sich einzelne Zurrgurte mit der erfindungsgemäßen Vorrichtung zur Ladungssicherung problemlos verlängern, ohne dass die Lastaufnahmefähigkeit eines solchen verbundenen Zurrgurtes leidet.

Im Folgenden wird die Erfindung anhand einer lediglich ein Ausführungsbeispiel darstellenden Zeichnung näher erläutert; es zeigen:

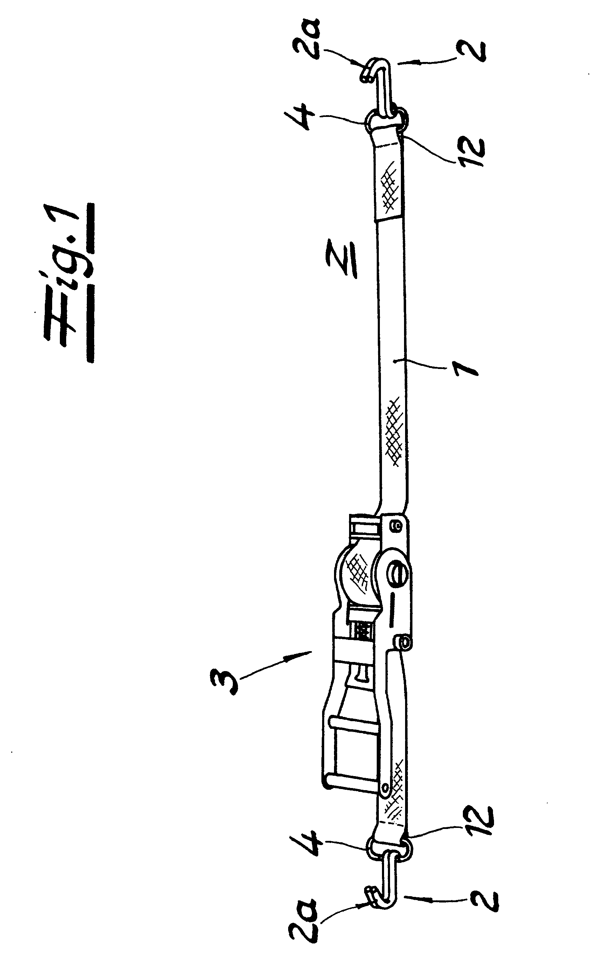

- Fig. 1: eine erfindungsgemäße Vorrichtung zur Ladungssicherung, deren Zurrgurt mit einer Spannratsche bestückt ist, und an seinen beiden Enden Profilhaken aufweist, in schematischer Darstellung,
- Fig. 2: ein Gurtbandende des Zurrgurtes nach Fig. 1 mit Profilhaken, die einen Doppelprofilhaken bilden,
- Fig. 3: den Gegenstand nach Fig. 2 unter Bildung eines U-Profilhakens,
- Fig. 4a, b eine: Verbindungsöse im Detail in zwei verschiedenen Ausgestaltungen,

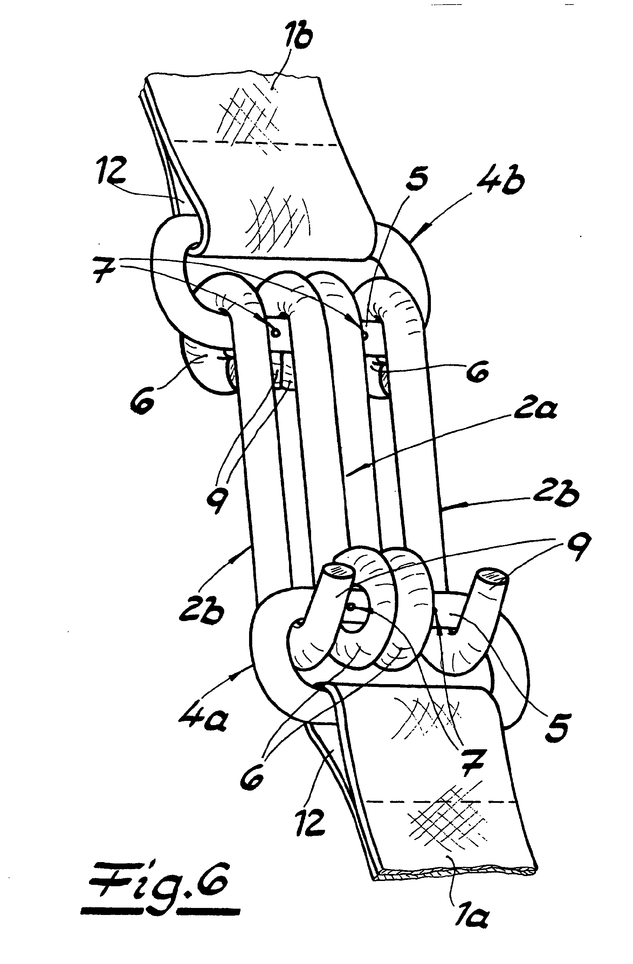

- Fig. 5: einen Profilhaken für den Gegenstand nach Fig. 1, und
- Fig. 6: eine Zurrgurtverlängerung mit in endseitige Verbindungsösen wechselseitig eingreifenden Profilhaken.

In den Figuren ist eine Vorrichtung zur Ladungssicherung auf beispielsweise Fahrzeugen dargestellt, die in ihrem grundsätzlichen Aufbau einen Zurrgurt 1 und an beiden Gurtenden angeschlossene Profilhaken 2 aufweist. Ein solcher Zurrgurt 1 ist regelmäßig auch noch mit einer Ratsche 3 ausgerüstet. Bei dem Zurrgurt 1 handelt es sich im Rahmen des Ausführungsbeispiels um ein Gewebeband, wenngleich an dieser Stelle grundsätzlich auch andere Zugmittel, beispielsweise Ketten, Seile oder dergleichen zum Einsatz kommen können. - Daneben ist es auch denkbar, die Profilhaken 2 nicht an die beiden Gurtenden, sondern vielmehr im Verlauf des Zurrgurtes 1 an diesen anzuschließen.

Der Profilhakenanschluss wird mittels Verbindungsösen 4 bewerkstelligt. Denn an den zugehörigen Gurtenden sind die Verbindungsösen 4 mit einem orthogonal zur Gurtlängsrichtung verlaufenden Positionierschenkel 5 befestigt, welcher zur Positionierung der auf dem Positionierschenkel 5 verschiebbaren Profilhaken 2 sorgt.

Die Verbindungsöse 4 und die beiden Profilhaken 2 sind im Rahmen des Ausführungsbeispiels aus einem gebogenen Stahldraht entsprechenden (Rund-)Querschnitts gefertigt, dessen Enden nach der Biegung gegebenenfalls an den verbliebenen Draht angeschweißt werden, so wie dies beispielsweise für das stumpfe Ende einer Ringöse 6 am Profilhaken 2 gilt. Grundsätzlich eignen sich natürlich auch andere Werkstoffe für die Herstellung der Verbindungsöse 4 und des jeweiligen Profilhakens 2, so z.B. hochzugfeste Kunststoffe oder Kombinationen aus Stahl und Kunststoff.

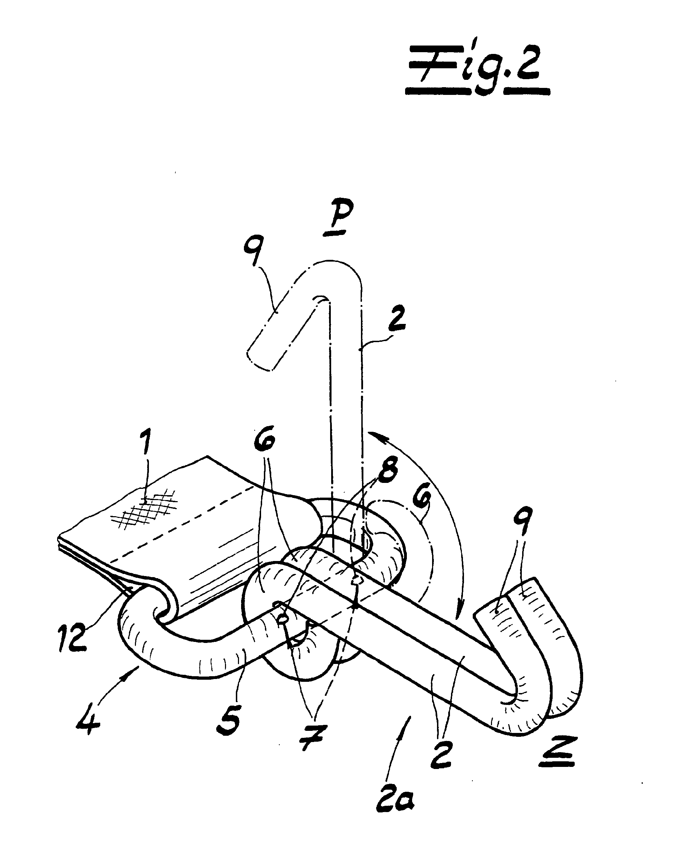

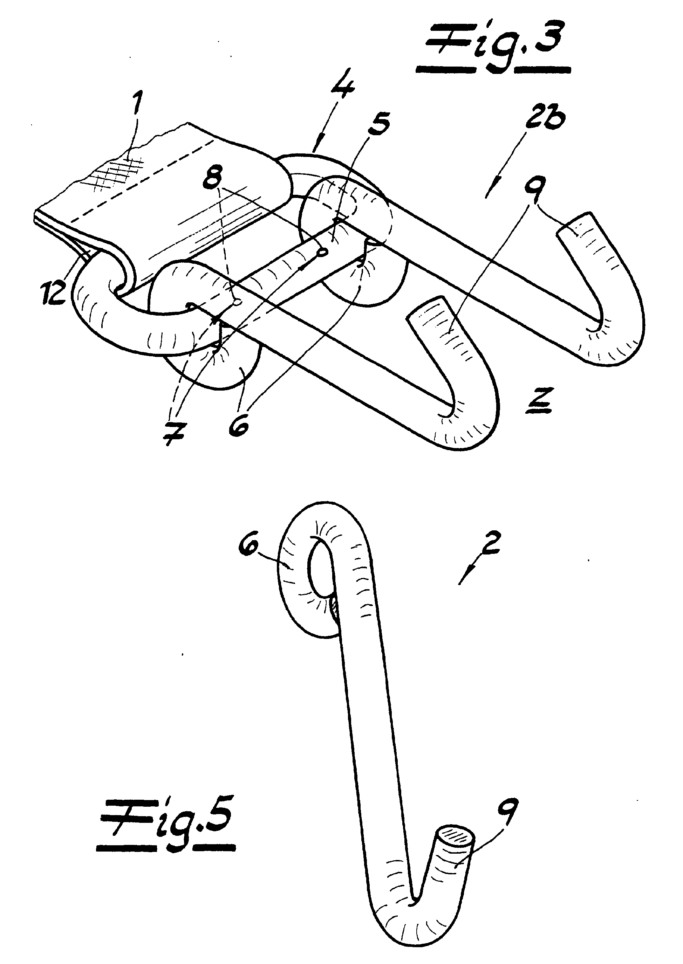

Die beiden Profilhaken 2 lassen sich - wie gesagt - auf der Verbindungsöse 4, genauer dem Positionierschenkel 5, verschieben und nehmen dabei wenigstens die beiden in den Fig. 2 und 3 dargestellten definierten Positionen ein, und zwar in Zugebene Z. Diese Zugebene Z wird vom Vektor der aufgebrachten Zugkraft festgelegt. Sie stimmt zumeist mit der Ebene überein, in welcher sich der Zurrgurt 1 in Längsrichtung erstreckt. Dabei nehmen die beiden Profilhaken 2 im Rahmen der Fig. 2 eine Position ein, die einem Doppelprofilhaken entspricht. Im Rahmen der Fig. 3 ist eine Stellung der Profilhaken 2 gezeigt, die einen U-Profilhaken darstellt.

Um zwischen den Positionen gemäß Fig. 2 und Fig. 3 wechseln zu können, müssen die Profilhaken 2 zunächst in eine zur Zugebene Z im Wesentlichen senkrechte Positionierebene P verschwenkt werden. Das geschieht durch simples Drehen der Profilhaken 2 um eine Achse, die vom Positionierschenkel 5 vorgegeben wird. Der Wechsel von der Zugebene Z in die Positionierebene P und zurück ist in der Fig. 2 durch einen Doppel-Pfeil angedeutet.

Erst wenn sich die Profilhaken 2 in der Positionierebene P befinden, lassen sie sich axial entlang des Positionierschenkels 5 verschieben und überfahren hierbei zugehörige Anschläge 7. Ausweislich der Fig. 2 bis 4 erkennt man, dass es sich bei den Anschlägen 7 um Radialerhebungen handelt, deren Spitzen 8 in Verlängerung die Positionierebene P aufspannen. Folglich ändert sich der Querschnitt des Positionierschenkels 5, der zumeist kreisrund ausgeführt ist, an dieser Stelle dergestalt, dass nun eine tropfenartige oder bauchige Querschnittsform im Bereich der Anschläge 7 vorliegt.

Auch die jeweilige Ringöse 6, mit welcher der Profilhaken 2 den Positionierschenkel 5 mit vorgegebenem Bewegungsspiel umgreift, weist einen solchen tropfenartigen bzw. bauchförmigen Querschnitt auf, und zwar als Innenquerschnitt der Ringöse 6. Das erklärt sich im Wesentlichen aufgrund ihrer Fertigung, bei welcher der zugehörige Draht bis zum geraden Verlauf wieder zurückgebogen wird und so die entsprechende Gestaltung gleichsam automatisch schafft.

Jedenfalls sorgt die Ausführung der Anschläge 7 als auf den Positionierschenkel 5 aufgebrachte Schweißpunkte in Verbindung mit dem sich praktisch zwangsläufig einstellenden Innenquerschnitt der Ringöse 6 dafür, dass die Profilhaken 2 nur dann auf dem Positionierschenkel 5 axial verschoben werden können, wenn sie sich in der Positionierebene P befinden.

Umbiegungen 9 an den ösenfreien Hakenenden der Profilhaken 2 stellen sicher, dass die Profilhaken 2 entweder als Doppelprofilhaken (vgl. Fig. 2) einwandfrei in einen ösenartigen Zurrpunkt eingehängt werden können oder in Gestalt eines U-Profilhakens (vgl. Fig. 3) sicher an einem Fahrzeuglängsträger halten.

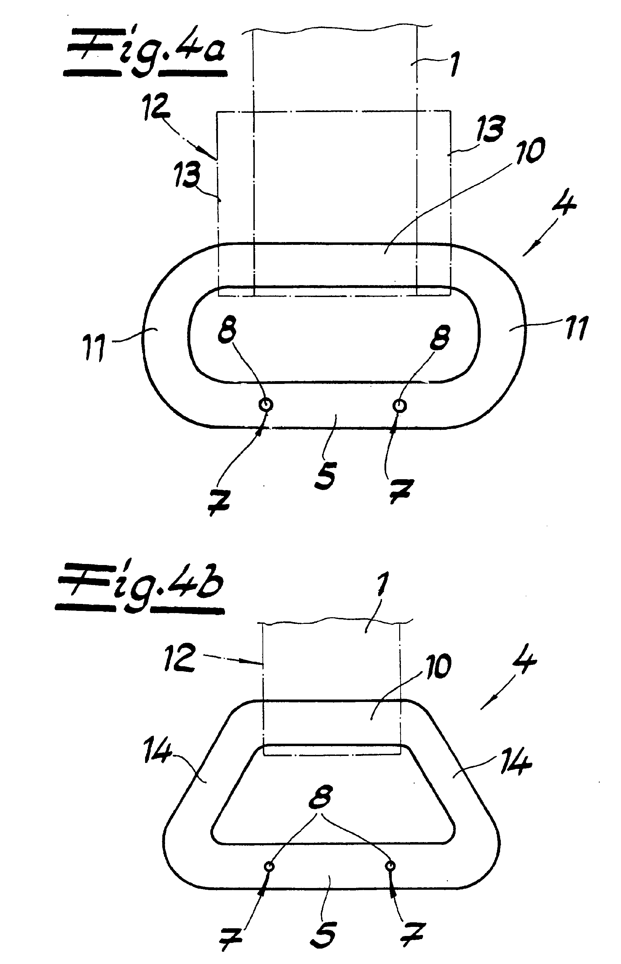

Anhand der Fig. 4a und 4b erkennt man, dass die Verbindungsöse 4 neben dem Positionierschenkel 5 noch über einen Befestigungsschenkel 10 verfügt. Im Fall der Fig. 4a sind Befestigungsschenkel 10 und Positionierschenkel 5 im Wesentlichen gleichlang ausgeführt und verlaufen jeweils geradlinig und parallel zueinander. Das ist jedoch nicht zwingend. Für die Verbindung von Befestigungsschenkel 10 und Positionierschenkel 5 sorgen in diesem Fall Ösenbögen 11. Der Befestigungsschenkel 10 ist an das betreffende Gurtbandende angenäht, z.B. in eine Gurtbandschlinge 12 eingenäht. Diese Gurtbandschlinge 12 verfügt über Gurtbandverbreiterungen 13, die für eine axial einwandfreie und verschiebesichere Verbindung zwischen Befestigungsschenkel 10 und Zurrgurt 1 sorgen.

Es kann aber auch in Übereinstimmung mit der Fig. 4b so vorgegangen werden, dass der Befestigungsschenkel 10 im Vergleich zum Positionierschenkel 5 kürzer ausgeführt ist. Auch in diesem Fall verlaufen beide Schenkel 5, 10 jeweils geradlinig, sowie parallel zueinander. Aufgrund der kürzeren Länge des Befestigungsschenkels 10 im Vergleich zum Positionierschenkel 5 sorgen in diesem Fall Dreieckschenkel 14 für deren Verbindung untereinander. Hierdurch wird eine insgesamt trapezförmige Verbindungsöse 4 gebildet. Selbstverständlich ist es denkbar, die Dreieckschenkel 14 nicht nur geradlinig, sondern auch bogenförmig verlaufen zu lassen.

Schließlich macht die Fig. 6 deutlich, wie mehrere Zurrgurte 1a, 1b miteinander verbunden werden können, weil an dieser Stelle im Zuge einer Zurrgurtverlängerung ein Doppelprofilhaken 2a in die eine Verbindungsöse 4b und ein U-Profilhaken 2b in die andere Verbindungsöse 4a der miteinander verbundenen Zurrgurte 1a, 1b eingreift. Im Rahmen der Erfindung lassen sich nicht nur einteilige, sondern auch zweiteilige bzw. mehrteilige Zurrgurte 1 zur Bündelung oder Umreifung von zugehörigen Ladegütern verwenden.

## Patentansprüche

1. Vorrichtung zur Ladungssicherung, mit einem Zurrgurt (1), mit einer am Zurrgurt (1) befestigten Verbindungsöse (4), und mit wenigstens zwei Profilhaken (2), die auf einem Positionierschenkel (5) der Verbindungsöse (4) verschiebbar gelagert sind und jeweils zumindest zwei definierte Positionen in Zugebene (Z) einnehmen, **dadurch gekennzeichnet , dass** der Positionierschenkel (5) geradlinig ist und dass die Profilhaken (2) zum Wechsel von einer in die andere Position in einer zur Zugebene (Z) im Wesentlichen senkrechten Positionierebene (P) verschoben werden und hierbei zum Positionierschenkel (5) gehörige Anschläge (7) überfahren.

2. Vorrichtung nach Anspruch 1, **dadurch gekennzeichnet, dass** die Anschläge (7) als Radialerhebungen ausgebildet sind, deren Spitzen (8) in Verlängerung die Positionierebene (P) aufspannen.

3. Vorrichtung nach Anspruch 1 oder 2, **dadurch gekennzeichnet, dass** es sich bei den Anschlägen (7) um zwei oder mehr auf den Positionierschenkel (5) aufgebrachte Schweißpunkte handelt.

4. Vorrichtung nach einem der Ansprüche 1 bis 3, **dadurch gekennzeichnet, dass** die beiden Profilhaken (2) in der einen Position einen Doppelprofilhaken und in der anderen Position einen U-Profilhaken bilden.

5. Vorrichtung nach einem der Ansprüche 1 bis 4, **dadurch gekennzeichnet, dass** der jeweilige Profilhaken (2) den Positionierschenkel (5) mittels Ringösen (6) mit vorgegebenem Bewegungsspiel umgreift.

6. Vorrichtung nach Anspruch 5, **dadurch gekennzeichnet, dass** die Profilhaken (2) an ihren ösenfreien Hakenenden Umbiegungen (9) aufweisen.

7. Vorrichtung nach einem der Ansprüche 1 bis 6, **dadurch gekennzeichnet, dass** die Verbindungsöse (4) als in ein Gurtende mittels eines Befestigungsschenkels (10) eingeschlaufte Rund- oder Ovalöse mit größtenteils geradlinigem Positionierschenkel (5) ausgebildet ist.

8. Vorrichtung nach Anspruch 7, **dadurch gekennzeichnet, dass** der Befestigungsschenkel (10) geradlinig und parallel zum Positionierschenkel (5) verläuft sowie im Wesentlichen gleichlang wie der Positioniershenkel (5) ist und in eine Gurtbandschlinge (12) mit Gurtbandverbreiterungen (13) eingehängt wird.

9. Vorrichtung nach Anspruch 7, **dadurch gekennzeichnet, dass** der Befestigungsschenkel (10) geradlinig sowie parallel zum Positionierschenkel (5) verläuft und kürzer als dieser ist und mittels Dreieckschenkeln (14) an den Positionierschenkel (5) angeschlossen ist, so dass eine insgesamt trapezförmige Verbindungsöse (4) gebildet wird.

## Claims

1. A device for securing a load, with a lashing strap (1), with a connecting buckle (4) secured to the lashing strap, and with at least two profile hooks (2), which are supported on a positioning shank (5) such that they can be moved and can each take up at least two defined positions in the plane of tension (Z),
**characterised in that** the positioning shank is straight and that for the change from one position to the other the profile hooks (2) are moved into an essentially perpendicular positioning plane (P) and here travel over stops (7) that are part of the positioning shank (5).

2. The device according to Claim 1, **characterised in that** the stops (7) are formed as radial elevations, whose tips (8) generate in extension the positioning plane (P).

3. The device according to Claim 1 or 2, **characterised in that** the stops (7) take the form of two or more welding spots applied to the positioning shank (5).

4. The device according to one of the Claims 1 to 3, **characterised in that** the two profile hooks (2) in the one position form a double profile hook and in the other position a U-profile hook.

5. The device according to one of the Claims 1 to 4, **characterised in that** the profile hook (2) in question encompasses the positioning shank (5) by means of annular loops (6) with a prescribed movement clearance.

6. The device according to Claim 5, **characterised in that** the profile hooks (2) have curvatures at the ends of the hooks that do not have loops.

7. The device according to one of the Claims 1 to 6, **characterised in that** the connecting buckle (4) is formed as a round or oval buckle that is fitted into one end of the strap by means of a securing shank (10), with a positioning shank (5) that is for the most part straight.

8. The device according to Claim 7, **characterised in that** the securing shank (10) runs straight and parallel to the positioning shank (5) and is essentially the same length as the positioning shank (5), and is fitted into a strap sling (12) with strap broadenings (13).

9. The device according to Claim 7, **characterised in that** the securing shank (10) runs straight and parallel to the positioning shank (5) and is shorter than the latter, and is connected to the positioning shank (5) by means of triangular shanks (14), so that a connecting buckle (4) is formed that in total is trapezoidal.

## Revendications

1. Dispositif pour la fixation de chargement avec une sangle d'amarrage (1), avec un oeillet de connexion (4) fixé sur la sangle d'amarrage (1) et avec au moins deux crochets profilés (2), qui sont logés coulissants sur une branche de positionnement (5) de l'oeillet de connexion (4) et prennent respectivement au moins deux positions définies dans le plan de traction (Z), **caractérisé en ce que** la branche de positionnement (5) est rectiligne et **en ce que** les crochets profilés (2) sont déplacés pour le passage d'une position à l'autre dans un plan de positionnement (P) sensiblement perpendiculaire au plan de traction (Z) et franchissent des butées respectives (7) en direction de la branche de positionnement (5).

2. Dispositif selon la revendication 1, **caractérisé en ce que** les butées (7) sont réalisées sur des élévations radiales dont les pointes (8) tendent le plan de positionnement (P) dans le prolongement.

3. Dispositif selon la revendication 1 ou 2, **caractérisé en ce qu'**il s'agit pour les butées (7) de deux ou plusieurs points de soudage appliqués sur les branches de positionnement (5).

4. Dispositif selon l'une des revendications 1 à 3., **caractérisé en ce que** les deux crochets profilés (2) forment dans une position un crochet double profilé et dans une autre positon un crochet profilé en U.

5. Dispositif selon l'une des revendications 1 à 4, **caractérisé en ce que** le crochet respectif profilé (2) entoure la branche de positionnement (5) au moyen d'oeillet annulaires (6) avec un jeu de mouvement prédéterminé.

6. Dispositif selon la revendication 5, **caractérisé en ce que** les crochets profilés (2) présentent des coudes (9) sur leurs extrémités de crochet sans oeillets.

7. Dispositif selon l'une des revendications 1 à 6, **caractérisé en ce que** l'oeillet de jonction (4) est réalisé comme un oeillet rond ou ovale inséré dans une extrémité de sangle au moyen d'une branche de fixation (10) avec une branche de positionnement en grande partie rectiligne (5).

8. Dispositif selon la revendication 7, **caractérisé en ce que** la branche de fixation (10) s'étend parallèlement et rectiligne en direction de la branche de positionnement (5) et est sensiblement de longueur égale à celle de la branche de positionnement (6) et est accrochée dans une boucle de sangle (12) avec un élargissement de sangle (13).

9. Dispositif selon la revendication 7, **caractérisé en ce que** la branche de fixation (10) s'étend rectiligne ainsi que parallèle à la branche de positionnement (5) en étant plus courte que celle-ci et est raccordée au moyen de branches triangulaires (14) à la branche de positionnement (5) de sorte qu'il est formé un oeillet de fonction (4) de forme globale trapézoïdale.
